# EUROPEAN PATENT APPLICATION

(11) **EP 4 420 905 A1**
(43) Date of publication of application: **28.08.2024**
(21) Application number: 23157847.7
(22) Date of filing: 21.02.2023
(51) Int. Cl.: B60K 1/00, B60K 7/00, B60K 17/04, B60K 17/16, B62D 7/18

(54) **AXLE HOUSING FOR AGRICULTURAL VEHICLE WITH INTERNAL PASSAGEWAY FOR ROUTING CONDUITS**

(71) Applicant: CNH Industrial Belgium N.V., 8210 Zedelgem (BE)
(72) Inventor: VANDENDRIESSCHE, Jean-Pierre, 8210 Zedelgem (BE); DE BROUWER, Bart, 8210 Zedelgem (BE); KINI, Ashwath, 8210 Zedelgem (BE)
(74) Representative: CNH Industrial IP Department

(57) **Abstract**

An axle for a vehicle includes a transversely mounted axle housing (610) that is configured to support ground contacting wheels (601) of the vehicle. A wheel hub (652) is rotatably connected to the axle housing about a drive axis (625). The wheel hub is configured to be connected to one of the ground contacting wheels of the vehicle. A motor (603) is configured to rotate the wheel that is connected to the wheel hub. The axle housing includes a passageway (614) defined at least partially through the axle housing through which lines, conduits or cables (607) pass for connecting to the motor.

## Description

### FIELD OF THE INVENTION

The invention is directed to a driven and/or steerable axle assembly for an agricultural vehicle.

### BACKGROUND OF THE INVENTION

Work vehicles, such as combine harvesters, forage harvesters, windrowers, swathers, and the like have a front axle and a rear axle. The vehicle may be four-wheel drive or two-wheel drive. The rear wheels may be steerable. Described herein is an improved axle for an agricultural vehicle that may be both steerable and directly powered by either a power take-off shaft or a hydraulic motor.

### SUMMARY OF THE INVENTION

According to one aspect of the invention, an axle for a vehicle includes an axle housing that is configured to support ground contacting wheels of the vehicle. A wheel hub is rotatably connected to the axle housing about a drive axis. The wheel hub is configured to be connected to one of the ground contacting wheels of the vehicle. A motor is configured to rotate the wheel that is connected to the wheel hub. The axle housing includes a passageway defined at least partially through the axle housing through which lines, conduits or cables pass for connecting to the motor.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
FIG. 1 is a top view of a drive axle of a vehicle, according to a first exemplary embodiment.
FIG. 2 is a rear view of the axle taken generally along line 2-2 of FIG. 1.
FIG. 3 is a top view of the right side of the axle shown taken generally along line 3-3 of FIG. 1 and showing the wheel fully turned toward the right.
FIG. 4 is a cross-section view of the right side of the axle shown in FIG. 2 taken along the lines 4-4.
FIG. 5 is a cross-sectional view of the left side of a partial axle, according to a second exemplary embodiment.
FIGs. 6-10 depict isometric views of the left side of a partial axle, according to a third exemplary embodiment.
FIG. 11 depicts a cross-sectional view taken through the partial axle of FIG. 9.
FIG. 12 depicts another cross-sectional view taken through the partial axle of FIG. 9.
FIG. 13 is a rear view of the partial axle of FIG. 6 with a cover omitted to reveal an internal planetary gear set.
FIG. 14 depicts an isometric view of the left side of a partial axle, according to a fourth exemplary embodiment, wherein various components of the axle have been omitted.
FIG. 15 depicts a cross-sectional view of the partial axle of FIG. 14.

### DETAILED DESCRIPTION OF THE INVENTION

Corresponding reference characters indicate corresponding parts throughout the several views. The exemplification set out herein illustrates embodiments of the invention, in one form, and such exemplification is not to be construed as limiting the scope of the invention in any manner.

In the drawings, like numerals refer to like items, certain elements and features may be labeled or marked on a representative basis without each like element or feature necessarily being individually shown, labeled, or marked, and certain elements are labeled and marked in only some, but not all, of the drawing figures.

The terms "longitudinal" and "transverse" are determined with reference to a fore-and-aft direction of the vehicle and are not to be construed as limiting.

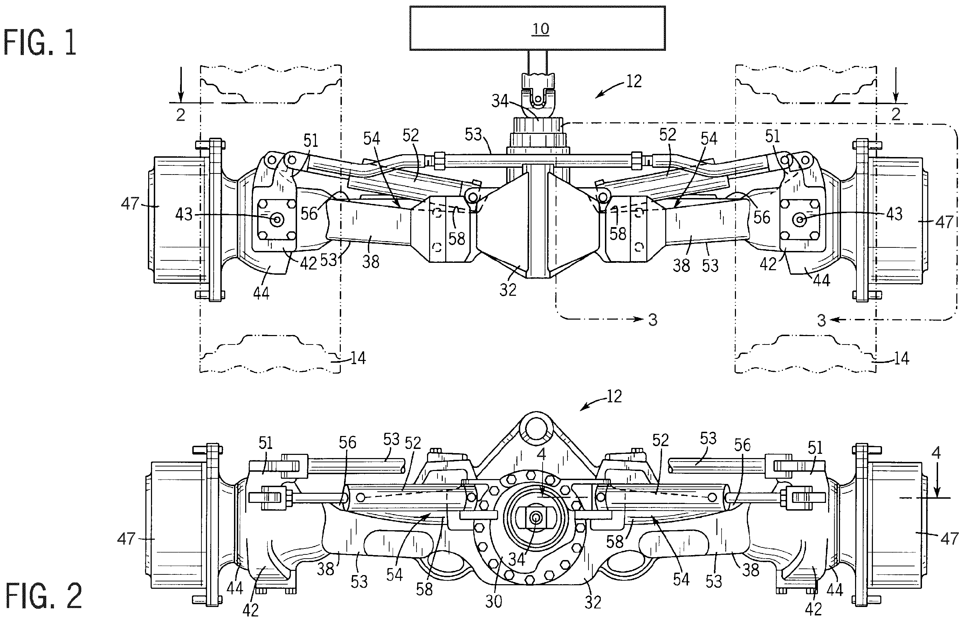

Turning now to FIGs. 1-4, as is described in U.S. Patent No. 6056081 an agricultural vehicle 10 includes a front axle coupled to front wheels and a rear axle coupled to rear wheels. Axle 12 and its wheels 14 depicted in FIG. 1 may represent the rear axle for the purposes of this disclosure. Alternatively, axle 12 may represent a front axle. An engine of the vehicle provides power through a transmission and a differential to drive wheels 14.

Wheels 14, shown in dashed lines in FIG. 1, are coupled to axle 12. Wheels 14 of the vehicle are steerable and may be driven. Axle 12 may have a differential 30. Differential 30 is encased in a differential housing 32 and has an input shaft 34. Input shaft 34 transmits power from the vehicle engine to rear wheels 14.

Extending from the right and left sides of differential 30 are drive shaft housings 38. For purposes of simplicity, the remainder of the description of rear axle 12 will focus on the right side. The left side of axle 12 includes the same components and is a mirror image of the right side.

A tie rod extending along axle 12 is pivotally connected to arms 51 projecting from pivot assemblies 42, located on to the right and left of differential 30. Tie rod 53 maintains an angular relationship between wheels 14.

Drive shaft housing 38 which encases axle shaft 36 has an outer wall 53 with a recess 54 disposed therein. Recess 54, which is configured to receive a portion of an actuator 52, extends into drive shaft housing 38 but not far enough into housing 38 as to interfere with axle shaft 36. A tip 56 of semi-conical recess 54 is located proximate pivot assembly 42, while a base 58 of recess 54 is located proximate differential housing 32. Recess 54 extends further into housing 38 at base 58 than at tip 56.

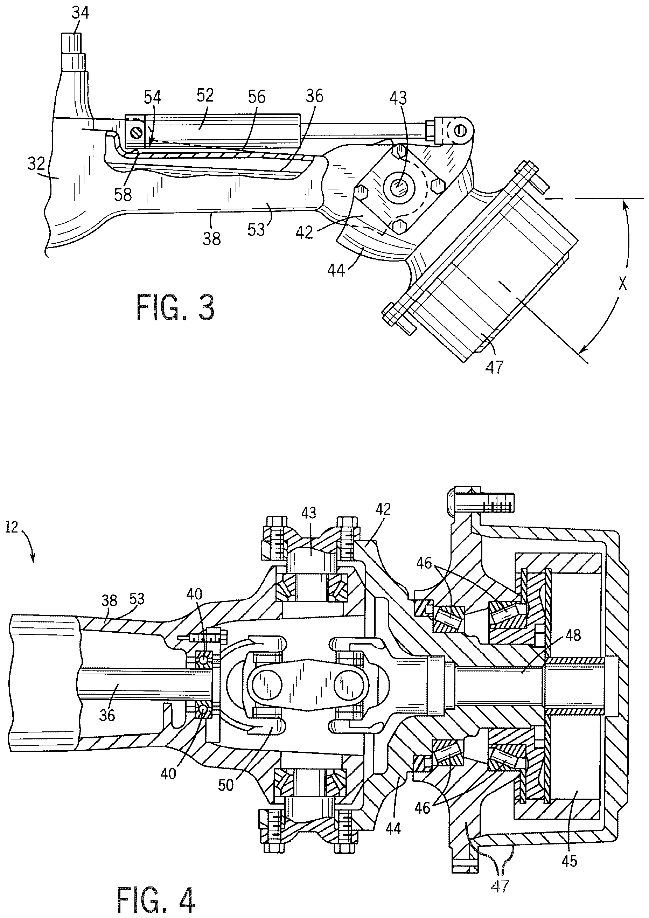

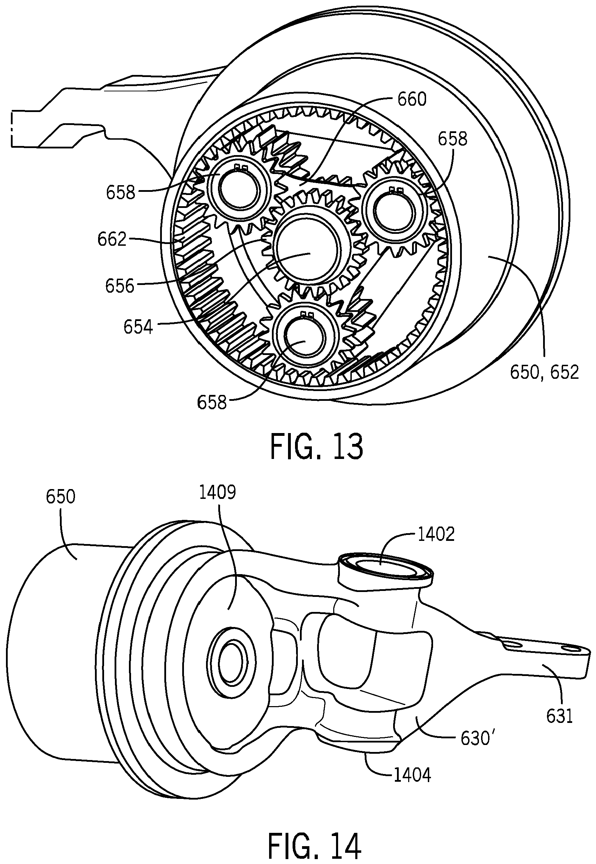

A pivot assembly 42 pivotally couples drive shaft housing 38 to a wheel bearing support 44. Wheel bearing support 44 constitutes a stationary inner bearing race. A bearing assembly 46 is mounted between bearing support 44 and a wheel hub 47. Bearing assembly 46 enables rotation of a wheel hub 47 relative to bearing support 44. Wheel hub 47 is driven to rotate by a wheel drive shaft 48 via a planetary gear drive assembly 45 that receives input power from wheel drive shaft 48. The components of planetary gear drive assembly 45 are not shown in FIG. 4, however, a suitable planetary gear set is shown in FIG. 13. The planetary gear drive assembly 45 includes an internal gear disposed on the interior revolved surface of a wheel hub 47 such that rotation of wheel drive shaft 48 causes rotation of wheel hub 47. It should be understood that one wheel 14 is mounted to wheel hub 47.

Pivot assembly 42 includes king pins 43 which pivotally couple support 44 to housing 38. Pins 43 enable wheel 14, coupled to wheel bearing support 44, to turn relative to drive shaft housing 38. Pivot assembly 42 houses an angle drive assembly 50. Angle drive assembly 50 is coupled to axle shaft 36 at an end opposite from MFD differential 30. Angle drive assembly 50 is also coupled to wheel drive shaft 48 of bearing support 44.

Actuator 52 is disposed between and coupled to drive shaft housing 38 and a pivot arm/portion 51 of pivot assembly 42. Actuator 52, which may be a hydraulic cylinder, turns pivot assembly 42 relative to drive shaft housing 38. At the turning angle which occurs as a result of the orientation of assembly 42 relative to housing 38 as shown in FIG. 3, a portion of actuator 52 is located in recess 54 of drive shaft housing 38, enabling actuator 52 to move closer to axle shaft 36 during steering. Wheel 14 may pivot to the right and left at respective angle X (for example).

The axle of FIGs. 1-4 is driven by power take off shafts that are powered by an internal combustion engine (for example) of the vehicle. According to a different embodiment, the axle may be driven by a separate hydraulic motor. The hydraulic motor could be a vane motor, a gear motor, a gerotor motor, an axial plunger motor, or a radial piston motor, by way of example. Also, as noted below, the motor is not limited to being a hydraulic motor, and could be an electric motor, for example.

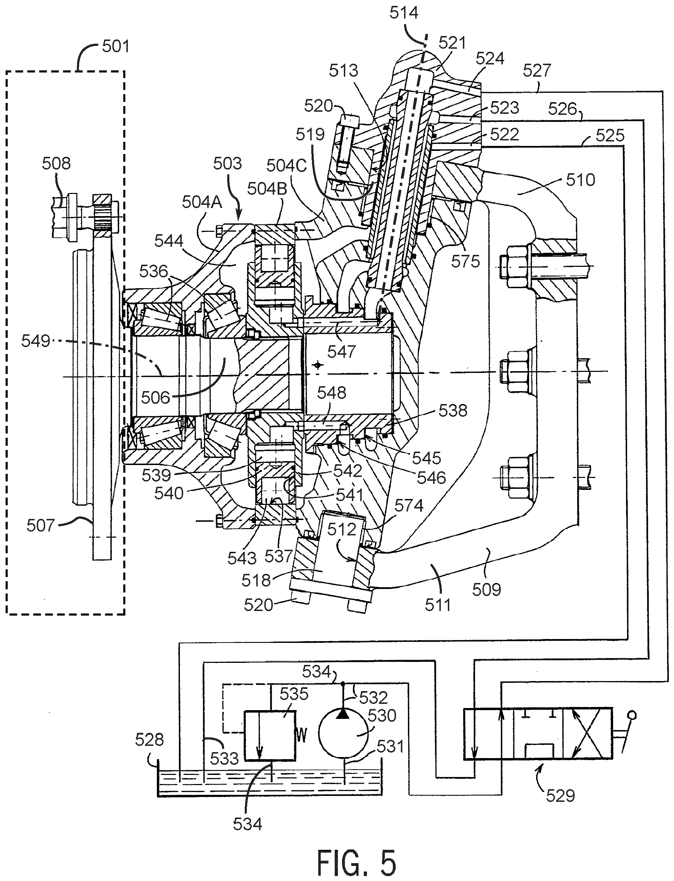

Turning now to FIG. 5, as is described in French Patent No. 2693154, one end of an axle 500 is shown. Like axle 12, axle 500 may be used with an agricultural vehicle. Unlike axle 12, the wheels connected to axle 500 are driven by a separate hydraulic motor as opposed to a power take off shaft.

Axle assembly 500 generally includes a frame 509 mountable to the remaining portion of the axle (not shown), a hydraulic motor 503 comprising a three-part casing 504A-C as well as an output shaft 506, and a fixing flange 507 on which the ground contacting wheel 501 is fixed by bolts 508. Frame 509 includes two arms 510, 511. The end of the lower arm 511 is provided with a bore 512, and the end of the upper arm 510 is provided with a bore 513. A lower journal 518 and an upper journal 519 are introduced into the bores 512 and 513 and are fixed to the part 504C of the motor housing 503 by fasteners 520, and cooperate with rings 574 and 575, respectively, to carry out pivoting of the motor 503 and wheel 501 around the pivot axis 514. Wheel 501 may be steerable using a hydraulic actuator, such as the actuator 52 shown in FIG. 3.

The upper journal 519 is surmounted by an end cap 521 provided with three hydraulic connections 522, 523, 524 that are connected to three external conduits 525, 526, 527, respectively. The conduit 525 is connected to a reservoir 528. The conduits 526 and 527 are connected to a distributor 529 with three positions. A pump 530 has its suction duct 531 connected to the reservoir 528, and, its discharge duct 532 connected to the distributor 529. A conduit 533 connects the distributor 529 to the reservoir 528. A duct 534, on which a discharge valve 535 is arranged, connects the discharge duct to the reservoir 528.

The hydraulic motor 503 is of the radial piston type (and can vary as described above). Motor 503 comprises: rolling bearings 536 carrying out the rotational mounting of the shaft 506 relative to the casing 504A-C around an axis 549; a corrugated cam 537 formed by the internal periphery of the part 504B of the casing; an internal fluid distributor 538 with the various working chambers 539 each delimited by a piston 540 slidably mounted in a cylinder 541 formed in a cylinder block 542 integral with respect to the rotation of the shaft 506. The pistons are in abutment reaction on the cam 537 by means of rollers 543; and, an enclosure 544 delimited inside the casing 504A-C. The internal fluid distributor 538 comprises two chambers constituted by annular grooves 545, 546 for distributing fluid to two groups of conduits 547, 548 respectively, themselves in periodic communications with said working chambers 539.

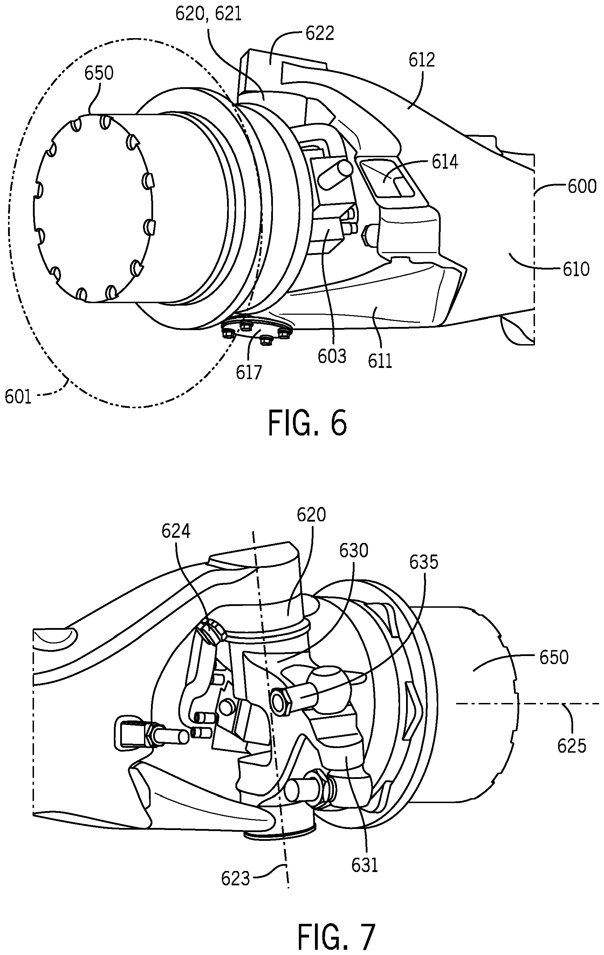

Turning now to FIGs. 6-10, another partial axle 600 is shown. Axle 600 may be a rear axle or a front axle. Only one side of axle 600 is shown, however, the opposite side of axle 600 not shown in those figures is substantially similar to that which is shown. It should be understood while a ground contacting wheel 601 attached to axle 600 is hydraulically powered by a hydraulic motor 603 (like axle 500 of FIG. 5), axle 600 could be powered by a power take-off (PTO) shaft like the axle 12 of FIG. 1. Thus, the details of axles 12 and 500 apply to the axle 600.

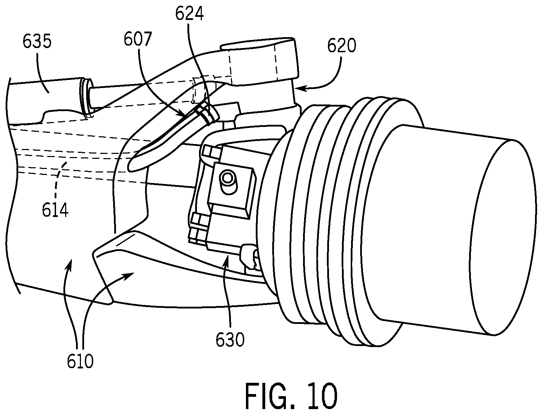

The partial axle 600 generally comprises a frame 610 having a C-shaped end including a lower arm 611 and an upper arm 612. A transversely extending passageway 614 is disposed in the frame 610. An opening at the end of passageway 614, which is shown in FIGs. 6 and 10, is disposed at an elevation between arms 611 and 612. The opening of passageway 614 faces hydraulic connections 624. Stated differently, the opening at the end of passageway 614 faces, is directly adjacent and/or is positioned in the direct vicinity of the hydraulic connections 624.

In an assembled form of the axle 600, hydraulic lines 607 that (ultimately) deliver fluid to motor 603, which drives wheel 601, are positioned within passageway 614. Positioning the hydraulic lines 607 within passageway 614 protects the lines 607 from damage by other components of the vehicle (as compared with externally routed lines), subjects the lines 607 to less bending which improves hydraulic efficiency, simplifies routing of the lines 607, and limits the accumulation of dirt and debris on those lines 607 (as compared with externally routed lines).

According to this embodiment, lines 607 (ultimately) carry fluid to hydraulic motor 603 via a bearing assembly 620 and a manifold 644, however, it should be understood that it is contemplated that, according to a different embodiment, lines 607 could carry electrical current to motor 603 if motor 603 was an electric motor. Most of the aforementioned benefits of routing lines 607 within passageway 614 are applicable for an electrical motor and its current carrying lines.

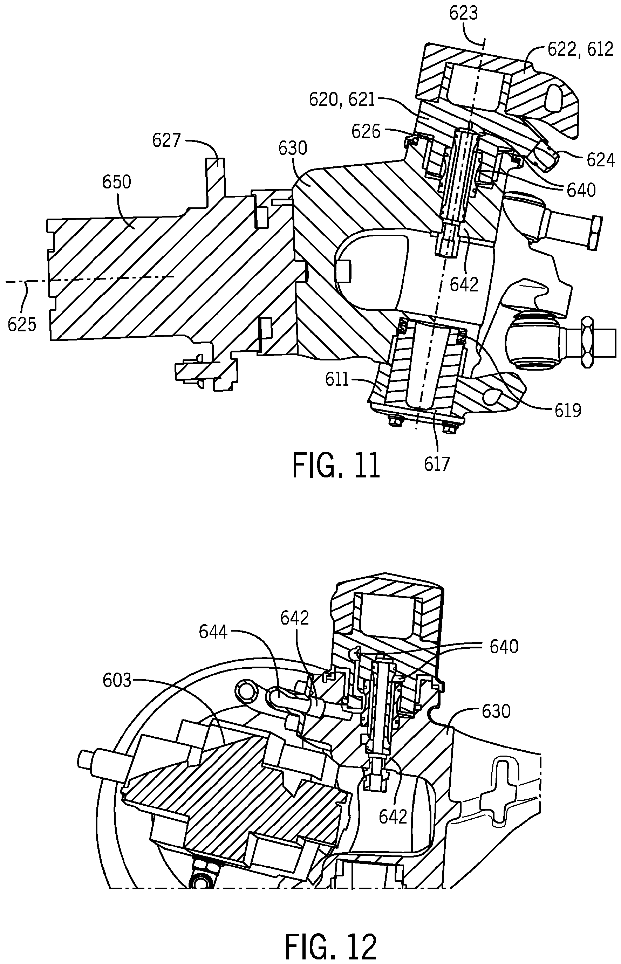

As best shown in FIG. 11, a bearing assembly 617 is fixed to the free end of lower arm 611. Bearing assembly 617 includes a hollow cup-shaped cylindrical body and an axial thrust bearing 619 that is mounted to the top end of that body. The body of bearing assembly 617 is a stationary component, i.e., stationary with respect to frame 610. Bearing 619 is sandwiched between the body of the bearing assembly 617, and a surface of a steering knuckle 630.

The bearing assembly 620, which may also be described as a turret, is fixed to the free end 622 of upper arm 612. As best shown in FIGs. 7 and 11, bearing assembly 620 includes a cylindrical bearing body 621 including an upper end that is fixed to end 622 of upper arm 612 and a lower end that is mounted to steering knuckle 630 by an axial thrust bearing 626. The body 621 of bearing assembly 620 is a stationary component, i.e., stationary with respect to frame 610. By virtue of the bearings 626 and 619, steering knuckle 630 is configured to rotate about steering axis 623 relative to frame 610. Steering axis 623 is substantially orthogonal (or oblique to) drive axis 625.

Although axial thrust bearing have been mentioned thus far, it should be understood that other bearings types are envisioned, such as conical bearings, radial bearings, needle bearings, bushings, and so forth.

The body 621 of bearing 620 includes a series of three different flow passages 640 extending, respectively, from three different hydraulic connections 624. Hydraulic connections 624 and their respective flow passages 640 may not substantially differ in form, function and purpose from hydraulic connections 522-524 and their respective flow passages of FIG. 5. The body 621 of bearing 620 is analogous to stationary end cap 521. Thus, the details of the flow passages described above with reference to FIG. 5 also apply to the flow passages within the bearing 620.

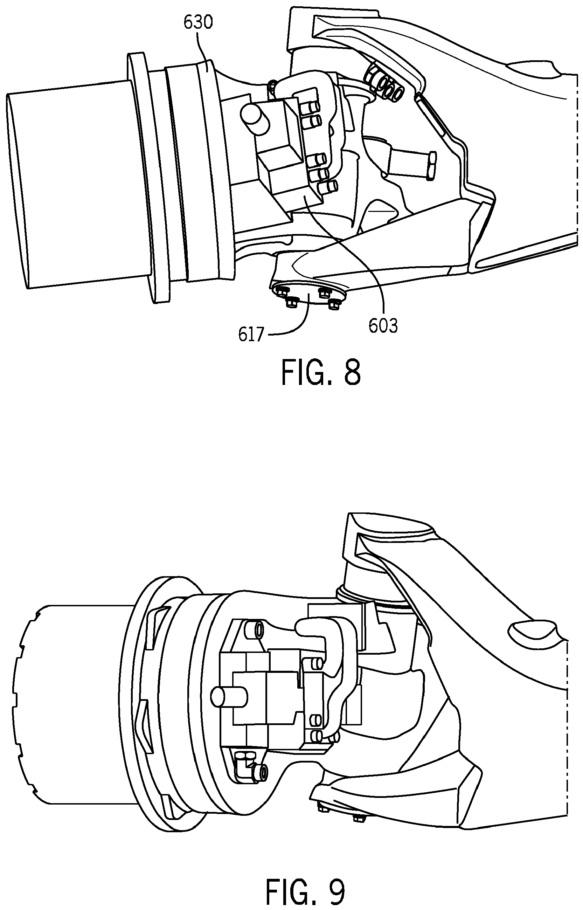

Turning now to FIGs. 8-12, the fluid channels 640 of bearing assembly 620 are fluidly connected to fluid channels 642 formed in steering knuckle 630. Knuckle 630 may be considered analogous to part 504C that is rotatable about axis 514 relative to end cap 521. Thus, the details of the flow passages described above with reference to FIG. 5 also apply to the flow passages within steering knuckle 630. Generally speaking, the entire fluid flow diagram shown in FIG. 5 is applicable to axle 600.

The fluid channels 642 formed in steering knuckle 630 are fluidly connected to fluid channels and passageways formed in a manifold 644 (FIG. 12) that is connected to the exterior of steering knuckle 630. The fluid channels in manifold 644 are fluidly connected to fluid channels within motor 603. Introducing fluid into motor 603, causes rotation of an output shaft of motor 603 in the known manner. The output shaft of motor 603 is connected to a planetary gear drive assembly 650, like the assembly 45 of FIG. 4.

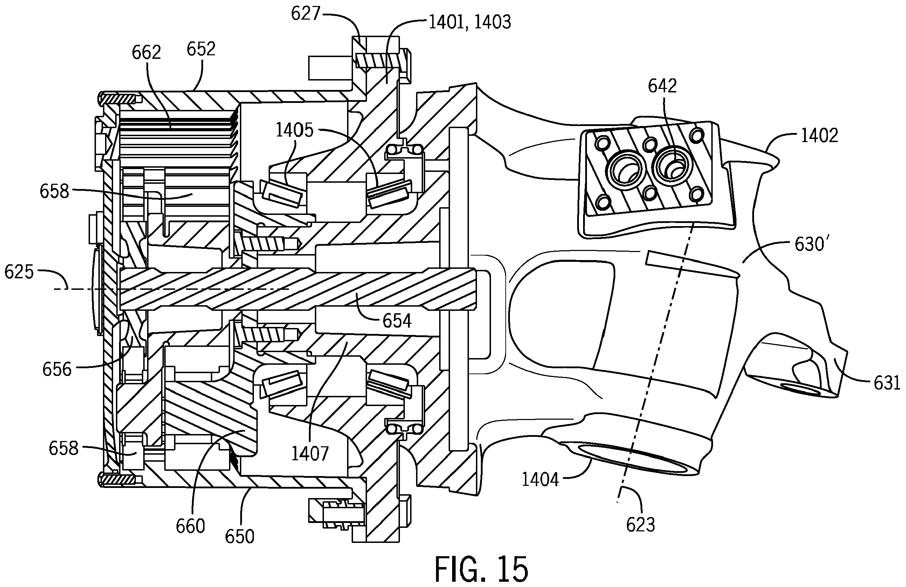

Turning now to FIG. 13 and 15, those figures show a planetary gear drive (PGD) assembly 650. It is noted at the outset that even though FIGs. 13 and 15 depict different embodiments, those embodiments have the same PGD assembly 650. PGD assembly 650 includes a housing 652 that is mounted to knuckle 630, such that PGD assembly 650 pivots along with knuckle 630 about steering axis 623. PGD assembly 650 includes a shaft 654 that is non-rotatably connected to the output shaft of motor 603. Alternatively, shaft 654 may represent the output shaft of motor 603. Shaft 654 is non-rotatably connected to a sun gear 656. Sun gear 656 meshes with a series of planet gears 658 that are interconnected by a triangular-shaped carrier 660. The carrier 660 is bolted to an inner race 1407 (see FIG. 15). Inner race 1407 does not rotate about drive axis 625 along with the rotating components of PGD 650. The planet gears 658 are meshed with an internal gear 662 disposed on the interior revolved surface of housing 652. Rotation of internal gear 662 and consequent rotation of housing 652 about drive axis 625 causes rotation of the wheel 501 (not shown in these figures) that is bolted to the flange 627 of housing 652. Housing 652 constitutes at least part of a wheel hub and may be referred to herein as a wheel hub.

PGD assembly 650 includes a bearing assembly 1401 including a cylindrical bearing carrier 1403 and a plurality of bearings 1405 arranged on an interior revolved surface of carrier 1403 that faces the inner race 1407. In the embodiment of FIGs. 6-13, the inner race 1407 is bolted to knuckle 630, whereas, in the embodiment of FIGs. 6-13, the inner race 1407 is integrated with knuckle 630', the significance of which will be described later.

The gears of PGD assembly 650 operate in a well-known conventional manner to convert the rotational speed of the output shaft of the motor 603 to a lower rotational speed that is ultimately transmitted to the ground wheel 601.

Turning now to FIGs. 7 and 10, a hydraulic or pneumatic actuator 635 having a well-known piston and cylinder arrangement is connected to the pivot arm 631 of steering knuckle 630. Actuator 635 is analogous to the actuator 52 of FIG. 3. In operation, extension and retraction of the piston within the cylinder of actuator 635 causes knuckle 630 to rotate about steering axis 623, which causes wheel 601 to rotate (like that shown in FIG. 3). It should be understood that knuckle 630 does not rotate about axis 625. It should be understood that wheel 601 turns along with knuckle 630, motor 603, PGD 650, and manifold 644, while the bodies of bearing assemblies 617 and 620 remain stationary.

Turning now to FIGs. 14 and 15, depicted in those figures is an alternative steering knuckle 630'. Like knuckle 630, knuckle 630' also includes, among other features, a body having internal fluid channels 642 (described above), a pivot arm 631 that interfaces with the actuator 635, a cylindrical end 1409 that is mounted to PGD assembly 650, an upper bearing surface 1402 that interfaces with bearing assembly 620, and a lower bearing surface 1404 that interfaces with bearing assembly 617. Elements 631, 1409, 1402, and 1404 are joined by material webs.

The differences between the knuckles 630 and 630' will be described hereinafter. The entire body of knuckle 630' is a monolithic and unitary component, which may be a cast part, for example. In the knuckle 630', the inner race 1407 is integrated with the body of knuckle 630'. A plurality of bearings 1405 are arranged on a surface of carrier 1403 that faces inner race 1407. One set of bearings 1405 engages the exterior revolved surface of race 1407, while the another set of bearings 1405 engages the exterior revolved surface of carrier 660 that is fixed to race 1407 by fasteners. Bearings 1405 may be in the form of tapered roller bearings, roller bearings, axial thrust bearings, conical bearings, ball bearings, radial bearings, needle bearings, bushings, and so forth.

Integrating knuckle 630' with race 1407 reduces the number of fasteners (as compared with a design including separate knuckles and races), which leads to lower material costs, reduces the number of potential failure points, results in lower weight, and eases the assembly and installation process.

It should be understood that the work vehicle described herein is not limited to any particular type of vehicle, and may be, for example, a combine, a tractor, a harvester, a beet harvester, a windrower, or even a passenger vehicle.

This application is intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An axle for a vehicle, said axle comprising:
an axle housing (610) that is configured to support ground contacting wheels (601) of the vehicle;
a wheel hub (652) that is rotatably connected to the axle housing about a drive axis (625), wherein the wheel hub is configured to be connected to one of the ground contacting wheels of the vehicle; and
a motor (603) configured to rotate said one of the wheels that is connected to the wheel hub;
***characterized in that*** the axle housing includes a passageway (614) defined at least partially through the axle housing through which lines (607) pass for connecting to the motor.

2. The axle of claim 1, further comprising the lines (607) routed within the passageway.

3. The axle of either claim 1 or 2, wherein the axle housing (610) includes a main body (610), an upper arm (612) branching from the main body for connection to the wheel hub, and a lower arm (611) branching from the main body for connection to the wheel hub, and wherein the passageway (614) is formed in the main body.

4. The axle of claim 3, further comprising an upper bearing assembly (620) connecting the upper arm (612) to the wheel hub (652), and a lower bearing assembly (617) connecting the lower arm to the wheel hub, wherein the upper and lower bearing assemblies are configured to permit rotation of the wheel hub about a steering axis (623).

5. The axle of claim 4, further comprising a steering knuckle (630, 630') that is mounted between the upper and lower bearing assemblies (620, 617), and is also mounted between the upper and lower arms (612, 611), and wherein the steering knuckle is rotatable about the steering axis relative to the axle housing and a stationary component (621) of each bearing assembly (620, 617).

6. The axle of claim 5, wherein the motor (603) and wheel hub (652) are mounted to the steering knuckle (630) and rotate along with the steering knuckle about the steering axis.

7. The axle of either claim 5 or 6, further comprising an actuator (635) mounted to the steering knuckle for rotating the steering knuckle and the motor about the steering axis.

8. The axle of one of claims 4-7, wherein one of the bearing assemblies (620) includes a bearing body (621) having at least one internal fluid passage (640), and a bearing (626) that is mounted to the bearing body (621) for accommodating rotation of the wheel hub (652) about the steering axis.

9. The axle of claim 8, wherein the at least one internal fluid passage (640) of the bearing body terminates at a connector (624) that is mounted to the body (621).

10. The axle of claim 9, wherein the connector (624) is positioned directly adjacent to an opening of the passageway (614) that is defined in the axle housing.

11. The axle of one of claims 8-10, wherein the steering knuckle (630, 630') is rotatably connected to the bearing body (621) about the steering axis (623), and wherein said steering knuckle includes an internal fluid passage (642) that is fluidly connected to the at least one internal fluid passage (640) of the bearing body (621).

12. The axle of one of claims 9-11, wherein the motor (603) is a hydraulic motor that is fluidly connected to the internal fluid passage (642) of said steering knuckle (630, 630') by an additional fluid line (644).

13. The axle of any one of the preceding claims, further comprising another wheel hub (652) connected to the axle housing (610), wherein the wheel hubs are connected to opposing sides of the axle housing.

14. A combine harvester (10), forage harvester, windrower or swather comprising the axle of any one of the preceding claims.
